# EUROPÄISCHE PATENTSCHRIFT

(11) **EP 0 672 976 B1**
(45) Veröffentlichungstag und Bekanntmachung des Hinweises auf die Patenterteilung: **07.04.1999**
(21) Anmeldenummer: 95101006.5
(22) Anmeldetag: 26.01.1995
(51) Int. Cl.: G05B 19/414, G05B 19/416

(54) **Elektronische Steuereinrichtung für Einzelantriebe von Bearbeitungsmaschinen und Verfahren zum Steuern der Einzelantriebe**
Electronic control system for single drives of operating machines and method of controlling the single drives
Mécanisme électronique de commande pour des entraînements individuelles de machines de façonnage et méthode à contrôler des entraînements individuelles

(30) Priorität: 17.03.1994 DE 4409097
(43) Veröffentlichungstag der Anmeldung: 20.09.1995
(73) Patentinhaber: Alfred H. Schütte GmbH & Co. KG., 51105 Köln (DE)
(72) Erfinder: Langer, Detlef, Dr. Ing., D-51467 Bergisch Gladbach (DE)
(74) Vertreter: Hennicke, Albrecht, Dipl.-Ing.

(56) Entgegenhaltungen:
- DE-A- 3 512 513
- DE-A- 4 011 491
- US-A- 5 194 793

## Beschreibung

Die Erfindung betrifft eine elektronische Steuereinrichtung für Einzelantriebe von Bearbeitungmaschinen, insbesondere von Werkzeugmaschinen mit mehreren Werkzeug- und/oder Werkstückantriebsvorrichtungen, für die Bearbeitung von Werkstücken in Bearbeitungszyklen, mit einem einen Frequenzgenerator und einen Frequenzumformer aufweisenden Zählimpulsgenerator, der während eines jeden Bearbeitungszyklus eine bestimmte Anzahl von Zählimpulsen erzeugt, mit einem Impulszähler zum Zählen der Zählimpulse und mit einer Speichereinheit mit Speichern, die für jeden Einzelantrieb mehrere Weginformationswerte enthalten. Die Erfindung hat ferner ein Verfahren zum Steuern solcher Einzelantriebe von Bearbeitungsmaschinen zum Gegenstand, bei dem mehrere Weginformationswerte für jeden Einzelantrieb in einer Speichereinheit gespeichert und während eines Bearbeitungszyklus der Bearbeitungsmaschine mehrere Zählimpulse erzeugt und mit einem Impulszähler gezählt werden und der Zählerstand des Impulszählers und die dem jeweiligen Zählerstand zugeordneten Weginformationswerte für die Einzelantriebe abgefragt werden.

Werkzeugmaschinen mit mehreren Bearbeitungsstationen und vielen Werkstück- und Werkzeugantrieben, wie beispielsweise Mehrspindeldrehautomaten, werden bisher überwiegend mechanisch über Kurven von einer zentralen Steuerwelle aus gesteuert. Eine solche mechanische Steuerung arbeitet zuverlässig und schnell, die Steuerbewegungen sind übersichtlich und die Bedienung der Maschine verhältnismäßig einfach. Mechanische Kurvensteuerungen können jedoch nur mit hohem Zeitaufwand veränderten Arbeitsbedingungen angepaßt werden, so daß derartige Maschinen sich nur für die Bearbeitung von Werkstücken eigenen, von denen hohe Stückzahlen benötigt werden. Das Umrüsten der mechanischen Kurvensteuerung erfordert einen erheblichen Zeitaufwand, ist für die Bedienungspersonen unbequem und verursacht hohe Kosten.

Um diese Nachteile der mechanischen Kurvensteuerung zu vermeiden, ist es auch bereits bekannt, die Werkzeugantriebe mit eigenen Antriebsmotoren zu versehen und diese elektronisch nach einem vorgegebenen Programm zu steuern. Hierzu ist es aber erforderlich, jedem Antrieb einen eigenen Rechner zuzuordnen und diese Rechner durch einen Hauptrechner aufeinander abzustimmen. Der hierfür erforderliche Aufwand ist bedeutend und die Zahl der noch gleichzeitig steuerbaren Antriebe auch bei Einsatz sehr leistungsfähiger Rechner begrenzt, da eine sehr große Zahl von Daten innerhalb kürzester Frist verarbeitet werden muß.

Aus der DE-OS 40 11 491 ist eine Steuereinrichtung und ein Verfahren der eingangs genannten Art bekannt. Bei dieser bekannten Steuerung sind die Zeitabstände, nach denen der Zählerstand abgefragt und die zum abgefragten Zählerstand gehörenden Informationswerte aus dem Speicher abgerufen werden, durch die Frequenz eines Taktsignalgenerators festgelegt, die während eines Bearbeitungszykluses nicht verändert werden kann, ohne gleichzeitig die Zeitabstände zu verändern, in denen den Regelkreisen für die Einzelantriebe deren Sollwerte zugeleitet werden. Die bekannte Steuereinrichtung arbeitet somit in einem "synchronen" Betrieb, indem neue Weginformationswerte an die Einzelantriebe mit derselben Frequenz weitergegeben werden, mit der auch der Zähler weiterzählt. Eine Nachbildung einer mechanischen Steuerung über Kurvenscheiben ist mit dieser bekannten, elektronischen Steuerung nicht bzw. nicht vollständig möglich.

Aus der DE-OS 35 12 513 ist ein Steuerungssystem für mehrere miteinander verkettete Fertigungseinrichtungen bekannt, das insbesondere bei in Fertigungsstraßen zum Einsatz kommenden Werkzeugmaschinen Verwendung findet. Bei dieser bekannten Steuerung ist der Antriebswelle einer jeden Fertigungseinrichtung ein inkrementaler Winkelgeber zugeordnet, dessen Ausgangsimpuls von einem zugehörigen Zählwerk mit unverlierbarem Zählerinhalt gezählt wird. Das Zählwerk ist eingangsseitig an einem Stelleingang mit einem die Ausgangsstellung der Einrichtung signalisierenden Stellschalter, am Dateneingang mit einem Sollwertgeber und am Ausgang mit einer Auslösebaugruppe der in der Fertigungsstraße nachgeschalteten Einrichtung verbunden. Diese bekannte Steuerung erlaubt es, daß mehrere, ein Werkstück nacheinander bearbeitende Einrichtungen in einem Bearbeitungskomplex praktisch ohne Zeitverlust miteinander zusammenarbeiten, indem die jeweils nachgeschaltete Einrichtung schon zum frühestmöglichen Zeitpunkt ausgelöst wird.

Ausgehend von dem durch die DE-OS 40 11 491 bekannten Stand der Technik stellt sich der Erfindung die Aufgabe, eine elektronische Steuereinrichtung für Einzelantriebe von Bearbeitungsmaschinen und ein Verfahren der eingangs genannten Art zu schaffen, die bei geringem Aufwand sehr genau arbeitet, rasch und einfach umgerüstet werden kann und bei ununterbrochener Koppelung aller Antriebe miteinander sehr schnell und ebenso zuverlässig arbeitet wie eine mechanische Kurvensteuerung und die ebenso übersichtlich ist und einfach bedient werden kann wie diese. Diese Aufgabe wird mit der Erfindung durch die in den Ansprüchen angegebenen Merkmale gelöst.

Durch die bei der Erfindung zusätzlich vorgesehene Rechnereinheit und den Frequenzumformer mit mehreren Frequenzteilern ist - anders als bei dem "synchronen" Betrieb der bekannten Steuereinrichtung, bei dem neue Weginformationswerte den Einzelantrieben mit derselben Frequenz weitergegeben werden, mit der auch der Zähler weiter zählt - bei der Erfindung ein "asynchroner" Betrieb möglich, da die Tastzeit, d.h. die Zeit, nach der die Speichereinheit wieder nach den gleichzeitig abgetasteten Zählerstand zugehörigen Weginformationswerten abgefragt wird, von der Zählfrequenz unabhängig ist.

Der zum Zählimpulsgenerator gehörende Frequenzgenerator kann ein von einem Hauptantrieb der Bearbeitungsmaschine angetriebener Impulsgeber sein. Die von dem Frequenz generator erzeugten Impulse, die in einer stets gleichbleibenden Anzahl pro Zeiteinheit, der "Quellfrequenz", ausgegeben werden, werden vom Frequenzumformer so moduliert, daß sie sich dem Maschinenlauf anpassen. Zu diesem Zweck dienen die Frequenzteiler, die je nach Bedarf von einer Frequenzteilerwechselvorrichtung gewechselt werden können, die von dem Impulszähler oder von einem übergeordneten Leitsystem, beispielsweise einer speicherprogrammierbaren Steuerung (SPS) gesteuert wird. Der Zählimpulsgenerator erzeugt während eines jeden Bearbeitungszyklus eine bestimmte Anzahl von Zählimpulsen, die von dem Impulszähler im Bearbeitungszyklus hochgezählt werden. Die Speicher enthalten für jede Antriebsvorrichtung mehrere Weginformationswerte, die entsprechend der gewünschten Bearbeitung ausgewählt sind und nach den entsprechenden Zählwerten für alle Antriebe gleichzeitig aufgerufen werden. Die Erfindung hat den Vorteil, daß mit einer einzigen zentralen Recheneinheit nicht nur eine praktisch unbegrenzte Zahl von Antrieben gleichzeitig gesteuert werden kann, da die zentrale Rechnereinheit nur verhältnismäßig wenige Informationen in jedem Tastzeitpunkt verarbeiten muß, die ihm von der Speichereinheit für alle Antriebe gleichzeitig zugeführt werden, sondern daß es durch die Entkoppelung von Tastzeit und Quell-bzw. Zählfrequenz möglich ist, die Zähl- bzw. Quellfrequenz während eines Bearbeitungszyklus beliebig zu verändern und dadurch eine mechanische (Kurven-)Steuerung mit der erfindungsgemäßen elektronischen Steuerung nachzubilden.

Um alle Antriebsvorrichtungen gleichzeitig steuern zu können, weist die Speichereinheit mindestens so viele Speicher auf, wie zu steuernde Antriebsvorrichtungen vorhanden sind. Jeder Speicher enthält dann alle Weginformationswerte der ihm zugeordneten Antriebsvorrichtung für einen Bearbeitungszyklus.

Die Rechnereinheit besteht zweckmäßig aus einem Sollwertrechner, der zu jedem Tastzeitpunkt allen Speichern die dem jeweiligen Zählimpuls zugeordneten Weginformationswerte entnimmt, und aus einem Antriebsrechner, der den aus den Weginformationswerten sich ergebenden Sollwerten für die Steuerung der Antriebsvorrichtungen Korrekturwerte hinzufügt. Diese Korrekturwerte berücksichtigen beispielsweise bei Mehrspindeldrehautomaten Spindellagenfehler und Wärmegang und werden den Wegsollwerten als Offset-Werte aufgeschaltet. Mit solchen Korrekturwerten können auch Nullpunktverschiebungen und außermittige Werkzeuglagen berücksichtigt werden.

Es ist ein besonderer Vorteil der Erfindung, daß für alle Antriebe nur ein einziger Antriebsrechner erforderlich ist, der die unterschiedlichen Wegsollwerte für alle Antriebe liefert, die den Regelkreisen für die einzelnen Antriebe zugeführt und dann verstärkt werden können.

Die Erfindung ermöglicht auch den Einsatz eines elektronischen Handrades, mit dem die Antriebe langsam von Hand gesteuert werden können, wie dies beim Einrichten der Maschine erforderlich ist. Zu diesem Zwecke kann der Impulszähler auch als Vor/Rückwärtszähler ausgebildet sein, so daß man die Bearbeitungsmaschine beim Einrichten auch rückwärts laufen lassen kann.

Besonders zweckmäßig ist es, wenn die Anzahl der Zählimpulse für den Bearbeitungszyklus frei wählbar ist und die Anzahl der Weginformationswerte in den Speichern der Anzahl der Zählimpulse des Impulszählers während eines Bearbeitungszyklus entspricht. Die Anzahl der zur Verfügung stehenden Weginformationen kann dann der Eigenart der Bearbeitung optimal angepaßt werden, so daß sich glatte Übergänge zwischen wechselnden Antriebsgeschwindigkeiten erzielen lassen.

Damit Geschwindigkeitssprünge vermieden werden, ist es zweckmäßig, wenn mindestens einzelnen Weginformationsspeichern jeweils ein Geschwindigkeitsinformationsspeicher zugeordnet ist, der eine Grenzgeschwindigkeitskonstante und zu jeder Weginformation eine Geschwindigkeitsinformation enthält. Die Rechnereinheit ist dann mit einem Interpolator versehen, der in Abhängigkeit von der Zählimpulsfrequenz des Impulszähler und in Abhängigkeit von einer vorgegebenen Grenzgeschwindigkeit aus den entnommenen Geschwindigkeitinformationswerten Weginformationswerte errechnet, die im Antriebsrechner mit aktuellen Weginformationen verknüpft und in Steuerzwischenwerte für die Regelkreise der Antriebsvorrichtungen umgeformt werden. Die Ermittlung solcher Zwischenwerte ist beim Anfahren und Abbremsen oder bei einem abrupten Bewegungswechsel besonders zweckmäßig, da dann die Massenträgheit besonders berücksichtigt werden muß.

Beim Steuern der Einzelantriebe nach der Erfindung werden zunächst mehrere Weginformationswerte für jede Antriebsvorrichtung in jeweils einer Speichereinheit entsprechend den gewünschten Bearbeitungen gespeichert, die den Übergang zwischen verschiedenen Geschwindigkeiten des Antriebes, die zeitliche Gliederung des Hubes, den Vorschub und Rücklauf und das Stillsetzen des Werkzeuges oder des Werkstückes längs der jeweiligen Arbeitsachse festlegen.

Danach werden mit einem Impulszähler während eines Bearbeitungzyklus der Bearbeitungsmaschine mehrere Zählimpulse erzeugt, die bis zu einem der Bearbeitung entsprechenden vorherbestimmten Wert hochgezählt werden. Hierbei werden in gleichen Zeitabständen der Zählerstand des Impulszählers von einer Rechnereinheit und die dem jeweiligen Zählerstand entsprechenden Weginformationwerte für die einzelnen Antriebsvorrichtungen gleichzeitig abgefragt und die abgefragten Weginformationswerte werden in die für die Bearbeitung erforderlichen Steuerwerte umgeformt. Danach werden diese Steuerwerte als Sollwerte den Regelkreisen für die jeweiligen Antriebsvorrichtungen zugeführt.

Wenn im Laufe eines Bearbeitungszyklus zeitweilig Zählimpulse mit einer niedrigen Frequenz geliefert werden, ist es möglich, daß zu aufeinanderfolgenden Tastzeitpunkten der gleiche Zählimpuls angetroffen wird und nicht zu allen Tastzeitpunkten Weginformationswerte zur Verfügung stehen, da diese nur definierten Zählimpulsen zugeordnet sind. Bei großen Geschwindigkeitsänderungen ergeben sich dann zwischen aufeinanderfolgenden Zählimpulsen sehr große Wegänderungen, die von dem jeweiligen Antrieb nicht realisiert werden können.

Um hier einen Ausgleich zu schaffen, ohne die Zählimpulsfrequenz zu erhöhen, wird mit der Erfindung vorgeschlagen, den jeweiligen (aktuellen) Zählerstand im Tastzeitpunkt mit dem Zählerstand des vorhergehenden Tastzeitpunktes zu vergleichen und einen dem aktuellen Tastzeitpunkt zugeordneten Weginformationswert durch Multiplizieren des dem Speicher am vorhergehenden Tastzeitpunkt entnommenen Geschwindigkeitswertes mit der Tastzeit zu ermitteln und die so errechnete Weginformation zu der dem vorhergehenden Tastzeitpunkt entsprechenden, aus dem Speicher entnommenen Weginformation zu addieren und auf diese Weise einen Weginformationszwischenwert zu bilden, wenn die Zählimpulsfrequenz einen vorgegebenen Mindestwert unterschreitet und der Geschwindigkeitswert im vorhergehenden Tastzeitpunkt eine vorgegebene Grenzgeschwindigkeit überschreitet.

Mit Hilfe der so gewonnenen Zwischenwerte ist es möglich, den Fluß der Steuerwerte zu glätten und Bewegungssprünge in den Antrieben zu vermeiden.

Die erfindungsgemäße Steuerung wird in der nachfolgenden Beschreibung und durch die Zeichnungen am Beispiel der Steuerung eines Mehrspindeldrehautomaten mit drei Antrieben näher erläutert. In den Zeichnungen zeigt:
- Fig. 1: eine Bearbeitungsmaschine mit drei Werkstückantrieben und drei Werkzeugantrieben und einer elektronischen Steuerung hierfür in einer schematischen Darstellung;
- Fig. 2: die elektronische Steuerung für die drei Werkzeug antriebe der Maschine nach Fig. 1 in einem Blockschaltbild;
- Fig. 3: die Darstellung der Zählimpulse eines Bearbeitungszyklus für die Werkzeugantriebe der Maschine nach Fig. 1 und
- Fig. 4: die Darstellung einer Variante der Zählimpulse in einem anderen Arbeitszyklus für die Werkzeugantriebe der Maschine nach Fig. 1

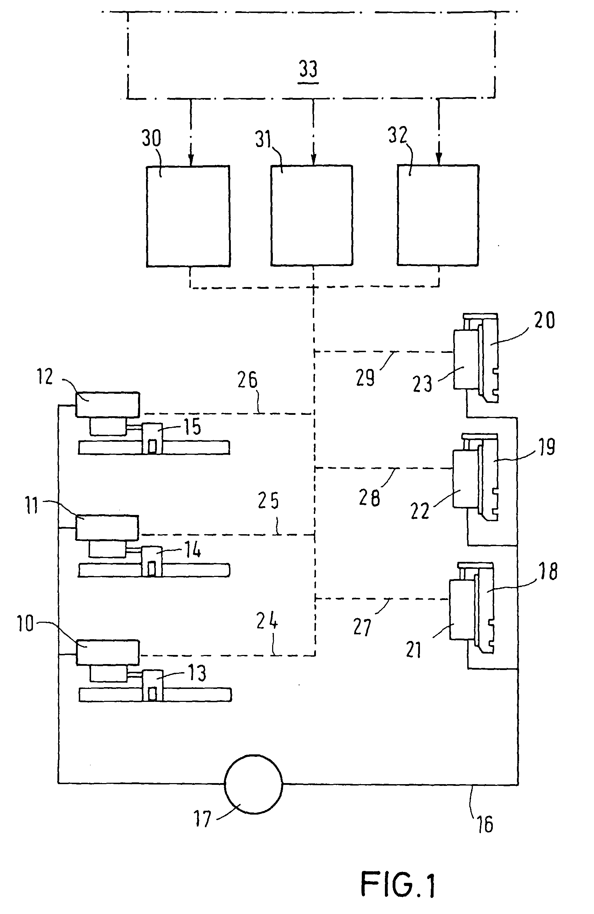

In Fig. 1 sind mit 10, 11 und 12 drei Werkstückspindeln eines Mehrspindeldrehautomaten bezeichnet, die in der Zeichnung nur schematisch angedeutet sind und von Werkstückantrieben 13, 14 und 15 drehend angetrieben werden. Die Werkstückantriebe 13, 14 und 15 sind über eine Energieleitung 16 mit einer Energiequelle 17 verbunden, an die auch die Werkzeugantriebe 18, 19 und 20 für drei Werkzeuglängsschlitten 21, 22 und 23 angeschlossen sind.

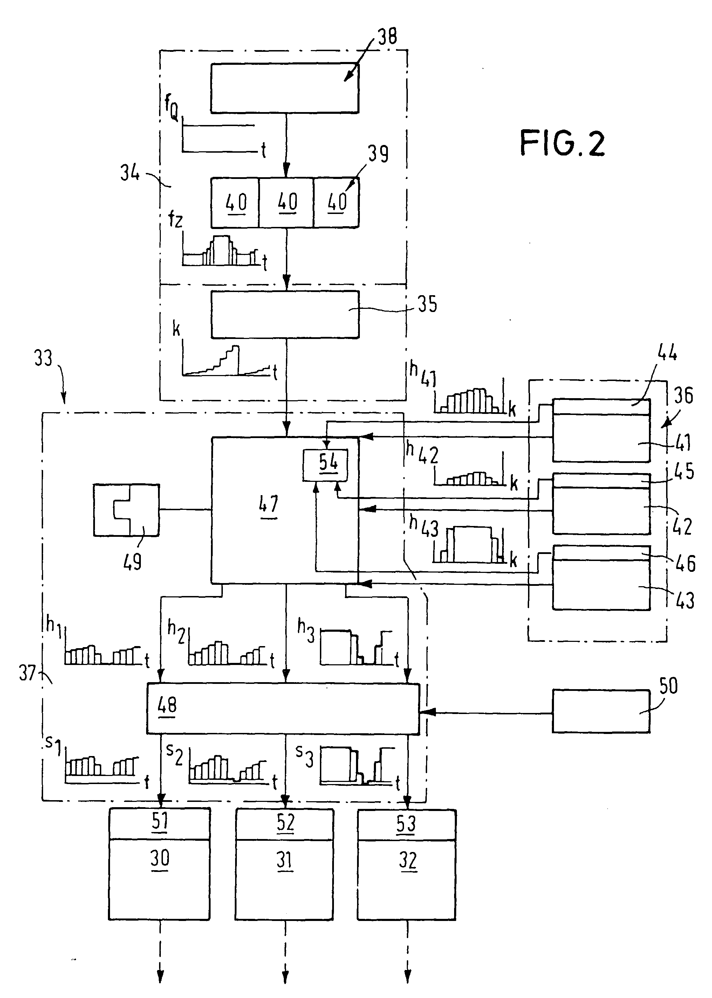

Die Werkstückantriebe 13, 14 und 15 sind über Steuerleitungen 24, 25 und 26 und die Werkzeugantriebe 18, 19 und 20 sind über Steuerleitungen 27, 28 und 29 mit ihren Regelkreisen verbunden, von denen in den Fig. 1 und 2 nur die Regelkreise 30, 31 und 32 für die Werkzeugantriebe 18, 19 und 20 dargestellt sind. Es ist jedoch klar, daß gleiche Regelkreise auch für die Werkstückantriebe 13, 14 und 15 vorgesehen sind.

Die Regelkreise 30 bis 32 der Werkzeugantriebe 18 bis 20 erhalten ihre Sollwerte von einer elektronischen Steuereinrichtung, die Gegenstand der Erfindung ist und die in Fig. 2 schematisch näher dargestellt ist.

Die elektronische Steuereinrichtung 33 dient bei dem dargestellten und beschriebenen Ausführungsbeispiel nur zum Steuern der Antriebe von Werkstücken und Werkzeugen während der Bearbeitungszyklen. Sie ist Teil der gesamten, elektronischen Maschinensteuerung, zu der auch noch eine speicherprogrammierbare Steuerung (SPS) gehört, mit der das Ein- und Ausschalten des Hauptmotors, das Weiterschalten der Spindeltrommel, das Zuführen, Spannen und Lösen der Werkstückstangen in den Werkstückspindeln und andere Funktionen des hier betrachteten Mehrspindeldrehautomaten gesteuert werden. Die SPS kann auch einzelne Aggregate der hier beschriebenen elektronischen Steuereinrichtung steuern, beispielsweise die Frequenzteilerwechselvorrichtung umschalten oder dem Frequenzgenerator eine andere Quellfrequenz zuweisen, wie dies im folgenden noch erläutert werden wird.

Die elektronische Steuereinrichtung 33 besteht im wesentlichen aus einem Zählimpulsgenerator 34, einem Impulszähler 35, einer Speichereinheit 36 und einer Rechnereinheit 37. Der Zählimpulsgenerator 34 weist einen Frequenzgenerator 38 und einen Frequenzumformer 39 auf. Der Frequenzgenerator 38 erzeugt Impulse f_{Q} gleichbleibender Frequenz, die sogenannte "Quellfrequenz", die aber je nach Art der Bearbeitung in der Maschine verschieden gewählt und beispielsweise von der SPS eingestellt werden kann.

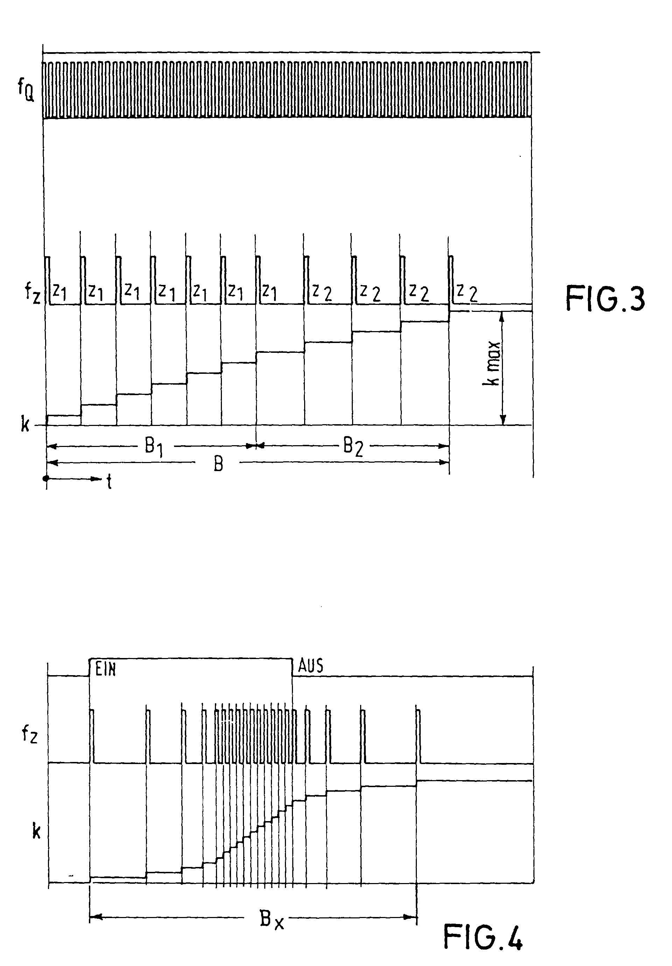

Der Frequenzumformer 39 enthält einen oder mehrere Frequenzteiler 40, mit denen die von dem Frequenzgenerator 38 erzeugte Quellfrequenz im Laufe eines Bearbeitungszyklus während aufeinanderfolgender Haupt- und Nebenzeiten umgeformt werden kann, so daß je nach Art der gewünschten Bewegung eines Werkstückes oder Werkzeuges im Eilgang oder Arbeitsgang im Laufe eines Bearbeitungszyklus am Ausgang des Zählimpulsgenerators Zählimpulse mit höherer oder geringerer Frequenz geliefert werden. Durch die Umschaltung der Frequenzteiler, die von der oben erwähnten, hier aber nicht dargestellten SPS aus erfolgen kann, wird nicht nur die gewünschte Frequenz für den Arbeits- und Schnellgang festgelegt, sondern es werden auch Rampen zwischen den verschiedenen Antriebsgeschwindigkeiten möglich, wie dies schematisch in den Fig. 3 und 4 dargestellt ist.

Fig. 3 zeigt in einem Diagramm im oberen Teil die von dem Frequenzgenerator 38 erzeugte Quellfrequenz f_{Q} und im unteren Teil die vom Frequenzumformer 39 modulierte Quellfrequenz, die Zählfrequenz f_{Z}. Man erkennt, daß die Zählfrequenz bei dem Ausführungsbeispiel nach Fig. 3 während des Bearbeitungszyklus B in einen ersten Frequenzbereich B₁ und in einen zweiten Frequenzbereich B₂ unterteilt ist, wobei im ersten Frequenzbereich die Zählimpulse Z₁ mit einer höheren Frequenz auftreten als die Zählimpulse Z₂ im zweiten Frequenzbereich. Hierbei sind die Zählimpulse Z₁ im ersten Frequenzbereich dem Eilgang des Längsschlittens beim Zustellen des Werkzeuges und die Zählimpulse Z₂ des zweiten Frequenzbereiches dem langsameren Arbeitsgang des Werkzeuges zugeordnet.

In Fig. 4 ist ein anderer Frequenzgang dargestellt, der den Bewegungsverhältnissen beim Anfahren und Anhalten eines Werkzeugschlittens angepaßt ist. Man erkennt, daß nach dem Einschalten des Antriebes die Zählfrequenz immer höher wird und nach dem Ausschalten stufenweise abfällt, so daß sie sich dem Lauf der Maschine anpaßt. Um eine solche Start/Stop-Rampe zu erreichen, ist es zweckmäßig, einem vom Hauptantrieb der Bearbeitungsmaschine angetriebenen Impulsgeber als Frequenzgenerator zu verwenden.

Die auf diese Weise vom Frequenzgenerator 38 erzeugten Zählimpulse Z werden während eines Bearbeitungszyklus B bis zur größten Höhe kₘₐₓ hochgezählt. Danach wird der Impulszähler 35 wieder auf Null gestellt und beginnt aufs Neue die vom Zählimpulsgenerator 34 gelieferten Zählimpulse Z hochzuzählen. Da die aufeinanderfolgenden Bearbeitungszyklen B immer gleich sind, ist es zweckmäßig, die Frequenzänderungen während eines Bearbeitungszyklus in Abhängigkeit vom Zählerstand des Impulszählers 35 zu bewirken. Der Impulszähler 35 steuert dann die Frequenzteilerwechselvorrichtung im Frequenzumformer und gleichzeitig die Arbeits- und Schnellgangdrehzahl sowie das Beschleunigen und Abbremsen beim Ingangsetzen und Anhalten der Antriebe.

Die Speichereinheit 36 enthält soviele Weginformationsspeicher 41, 42, 43 wie zu steuernde Antriebe vorhanden sind. Im dargestellten Ausführungsbeispiel sind zwar sechs Antriebe, nämlich drei Werkstückantriebe 13, 14 und 15 und drei Werkzeugantriebe 18, 19 und 20 vorhanden, es sind in Fig. 2 der Übersichtlichkeit halber jedoch nur drei Weginformationsspeicher 41, 42, 43 dargestellt, die den Antrieben 18, 19 und 20 für die Längsschlitten 21, 22 und 23 zugeordnet sein mögen. Es ist jedoch klar, daß weitere Weginformationsspeicher vorgesehen sein können, die den Antrieben 13, 14 und 15 der Werkstückspindeln 10, 11 und 12, oder weiteren Antrieben für Querschlitten oder andere Bearbeitungsaggregate zugeordnet sein könnten.

Die Weginformationsspeicher 41, 42 und 43 enthalten die Weginformationen für die einzelnen Antriebe 18, 19 und 20, denen sie zugeordnet sind. Diese Weginformationen sind frei programmierbar und legen den Vorschub des Werkzeuges im Eilgang, die Aufteilung des Werkzeughubes, die Übergänge zwischen den einzelnen Hüben im Arbeitsgang und den Rücklauf und die Stillsetzung des Werkzeuges auf der betreffenden Achse fest. Die Anzahl der Zellen eines jeden Speichers 41, 42, 43 ist mit der Zahl kₘₐₓ der Impulse Z identisch, die der Impulszähler 35 in einem Bearbeitungszyklus B hochzählt. Die unterschiedlichen Weginformationen h₄₁, h₄₂ und h₄₃, die in den Weginformationsspeichern 41, 42 und 43 enthalten sind und den einzelnen Zählimpulsen Z zugeordnet sind, sind neben den Speichern graphisch dargestellt.

Zu jedem Weginformationsspeicher gehört ein Geschwindigkeitsinformationsspeicher 44 bzw. 45 bzw. 46, der eine Grenzgeschwindigkeitskonstante und zu jeder Weginformation h eine Geschwindigkeitsinformation v enthält. Ebenso wie die Weginformationsspeicher enthalten auch die Geschwindigkeitsinformationsspeicher ebenso viele Zellen, wie der Impulszähler 35 in jedem Bearbeitungszyklus B Zählimpulse Z liefert.

Die Rechnereinheit 37 besteht aus einem Sollwertrechner 47 und aus einem Antriebsrechner 48. Der Sollwertrechner hat einen eigenen Impulsgenerator 49, der unabhängig vom Zählimpulsgenerator 34 Tastimpulse t mit einer gleichbleibenden Tastfrequenz t_{f} erzeugt.

Der Sollwertrechner 47 ist an den Impulszähler 35 und an die Speichereinheit 36 angeschlossen und tastet bei jedem seiner Tastimpulse t in gleichen Zeitabständen (Tastzeit) den Zählerstand k des Impulszählers 35 ab. Gleichzeitig entnimmt er in jedem Tastzeitpunkt die dem jeweils abgetasteten Zählerstand k zugewiesenen Weginformationswerte h aus den WeginformationsSPeichern 41, 42 und 43 der Speichereinheit 36 und formt sie in die für die Bearbeitung notwendigen Steuerwerte für die jeweilige Antriebsvorrichtung 18, 19 und 20 um.

Dem Sollwertrechner 47 ist der Antriebsrechner 48 nachgeschaltet, an den ein Korrekturwertspeicher 50 angeschlossen ist. Dieser Korrekturwertspeicher 50 enthält Korrekturwerte, beispielsweise für Spindellagenfehler und Wärmegang, Werkzeugabnutzung und Nullpunktverschiebungen, die von dem Antriebsrechner den vom Sollwertrechner kommenden Steuerwerten als Offset-Beträge aufgeschaltet werden. Die so modifizierten Steuerwerte s₁, s₂ und s₃ werden den Regelkreisen 30, 31 und 32 für die Werkzeugantriebe 18, 19 und 20 zugeführt und dann in Verstärkern 51, 52 und 53 verstärkt.

Weiter oben wurde darauf hingewiesen, daß ein großer Vorteil der elektronischen Steuereinrichtung nach der Erfindung darin liegt, daß die Rechnereinheit für jeden Antrieb nur verhältnismäßig wenig Werte je Zeiteinheit verarbeiten muß und deshalb Steuerwerte für sehr viele Antriebe gleichzeitig bereitstellen kann. Dies ist jedoch nur möglich, wenn die Zählimpulsfrequenz f_{Z} nicht zu hoch ist. Hierbei kann es jedoch geschehen, daß in zwei aufeinanderfolgenden Tastzeitpunkten der gleiche Zählerstand des Impulszählers abgetastet wird und die hierzu gehörenden Weginformationen der einzelnen Weginformationsspeicher unverändert bleiben. Entspricht dann im folgenden Tastzeitpunkt dem nächsten Zählerstand eine große Wegänderung, die einer hohen Geschwindigkeit einer Antriebsvorrichtung zugeordnet ist, kann der Antrieb einem solchen Steuerimpuls nicht folgen. Um solche Geschwindigkeitssprünge im Betrieb zu vermeiden, wird bei der Steuereinrichtung nach der Erfindung in der Rechnereinheit 37 ein Interpolator 54 vorgesehen. Dieser Interpolator 54 arbeitet nur dann, wenn die Zählimpulsfrequenz f_{Z} einen vorherbestimmten Grenzwert unterschreitet, beispielsweise wesentlich kleiner ist als die Tastfrequenz fₜ und wenn gleichzeitig eine vorgegebene, höchstmögliche Grenzgeschwindigkeit eines Antriebes überschritten wird.

Wie bereits oben erwähnt, enthält jeder Geschwindigkeitsspeicher 44, 45, 46 eine solche Grenzgeschwindigkeitskonstante und Zu jeder Weginformation der zugeordneten Weginformationsspeicher 41, 42, 43 eine Geschwindigkeitsinformation.

Werden die oben erwähnten, festgelegten Grenzwerte nicht eingehalten, vergleicht der Interpolator 54 den Stand des Impulszähler 35 im Tastzeitpunkt mit dem Zählerstand des vorhergehenden Tastzeitpunktes. Ist der Zählerstand zu beiden Tastzeitpunkten gleich, entnimmt der Interpolator aus dem entsprechenden Geschwindigkeitsinformationsspeicher 44 bzw. 45 bzw. 46 die Geschwindigkeitsinformation des vorhergehenden Tastzeitpunktes und errechnet hieraus durch Multiplikation mit der Tastzeit einen virtuellen Weginformationswert, den er dann zu der Weginformation am vorhergehenden Tastzeitpunkt addiert. Hieraus ergibt sich ein Weginformationszwischenwert, der dann, ggf. mit weiteren, darauffolgenden Weginformationszwischenwerten eine Rampenfunktion erfüllt.

Man erkennt, daß die von dem Interpolator durchzuführenden, zusätzlichen Rechenoperationen die Rechnereinheit 37 kaum belasten, da sie nur während der Bearbeitungszeit vorkommen und bei der Bearbeitung nur selten auftreten.

Die Erfindung ist nicht auf die dargestellte und beschriebene Ausführungsform beschränkt, sondern es sind mehrere Änderungen und Ergänzungen möglich, ohne den Rahmen der Erfindung zu verlassen. Beispielsweise kann die dargestellte und beschriebene elektronische Steuereinrichtung nicht nur bei Mehrspindeldrehautomaten, sondern auch bei anderen Bearbeitungsmaschinen, wie Fräs-, Schleif- und Stoßmaschinen verwendet werden, die mehrere Antriebe aufweisen. Ferner ist es möglich, der Rechnereinheit noch wesentlich mehr Speicher zuzuordnen und auch den Vorschub und das Spannen und Lösen der Werkstücke mit der elektronischen Steuereinrichtung zu steuern.

## Patentansprüche

1. Elektronische Steuereinrichtung für Einzeltantriebe von Bearbeitungsmaschinen, insbesondere von Werkzeugmaschinen mit mehreren Werkzeug- und/oder Werkstückantriebsvorrichtungen, für die Bearbeitung von Werkstücken in Bearbeitungszyklen, mit
- einem einen Frequenzgenerator (38) und einen Frequenzumformer (39) aufweisen Zählimpulsgenerator (34), der während eines jeden Bearbeitungszyklus (B) eine bestimmte Anzahl von Zählimpulsen (Z) erzeugt;
- einem Impulszähler (35) zum Zählen der Zählimpulse (Z); und mit
- einer Speichereinheit (36) mit Speichern (41-43), die für jeden Einzelantrieb (13,14,15, 18,19,20) mehrere Weginformationswerte (h) enthalten,
**dadurch gekennzeichnet, daß**
der Frequenzumformer (39) mehrere Frequenzteiler (40) aufweist und daß an den Impulszähler (35) und die Speichereinheit (36) eine Rechnereinheit (37) angeschlossen ist, die den Zählerstand (k) am Impulszähler (35) in gleichbleibenden Zeitabständen (Tastzeit) abtastet und der Speichereinheit (36) dem jeweils abgetasteten Zählerstand (k) zugewiesene Weginformationswerte (h) im Tastzeitpunkt entnimmt und in für die Bearbeitung notwendige Steuerwerte (s) umformt, die als Sollwerte einem Regelkreis (30,31,32) für den jeweiligen Einzelantrieb (18,19,20) zugeführt werden.

2. Steuereinrichtung nach Anspruch 1, **dadurch gekennzeichnet, daß** der Frequenzgenerator ein von einem Hauptantrieb der Bearbeitungsmaschine angetriebener Impulsgeber ist.

3. Steuereinrichtung nach Anspruch 1 oder 2, **dadurch gekennzeichnet, daß** die Speichereinheit (36) mindestens so viele Speicher (41 bis 43) aufweist, wie zu steuernde Antriebsvorrichtungen (18 bis 20) vorhanden sind.

4. Steuereinrichtung nach einem der Ansprüche 1 bis 3, **dadurch gekennzeichnet, daß** die Rechnereinheit (37) einen Sollwertrechner (47) und einen Antriebsrechner (48) aufweist, wobei der Antriebsrechner (48) den Sollwerten (s) für die Antriebsvorrichtungen (18 bis 20) Korrekturwerte hinzufügt.

5. Steuereinrichtung nach einem der Ansprüche 1 bis 4, **dadurch gekennzeichnet, daß** zur Handbetätigung ein elektronisches Handrad vorgesehen ist.

6. Steuereinrichtung nach einem der Ansprüche 1 bis 5, **dadurch gekennzeichnet, daß** der Impulszähler (35) ein Vor/Rückwärtszähler ist.

7. Steuereinrichtung nach einem der Ansprüche 1 bis 6, **dadurch gekennzeichnet, daß** der Frequenzgenerator (38) eine gleichbleibende, aber mit einer Einstellvorrichtung veränderbare Quellfrequenz (f_{Q}) erzeugt.

8. Steuereinrichtung nach einem der Ansprüche 1 bis 7, **dadurch gekennzeichnet, daß** der Frequenzumformer (39) mehrere Frequenzteiler (40) und eine Frequenzteilerwechselvorrichtung aufweist, die von dem Impulszähler (35) gesteuert wird.

9. Steuereinrichtung nach einem der Ansprüche 1 bis 8, **dadurch gekennzeichnet, daß** die Anzahl der Zählimpulse (Z) frei wählbar ist und die Anzahl der Weginformationswerte (h) in den Speichern (41 bis 43) der Anzahl der Zählimpulse des Impulszählers (35) während eines Bearbeitungszyklus (B) mindestens entspricht.

10. Steuereinrichtung nach einem der Ansprüche 1 bis 9, **dadurch gekennzeichnet, daß** mindestens einzelnen Weginformationsspeichern (41 bis 43) jeweils ein Geschwindigkeitsinformationsspeicher (44 bis 46) zugeordnet ist, der eine Grenzgeschwindigkeitskonstante und zu jeder Weginformation (h) eine Geschwindigkeitsinformation (v) enthält.

11. Steuereinrichtung nach einem der Ansprüche 1 bis 10, **dadurch gekennzeichnet, daß** die Rechnereinheit (37) einen Interpolator (54) aufweist, der in Abhängigkeit von der Zählimpulsfrequenz (f_{Z}) des Impulszählers (35) und einer vorgegebenen Grenzgeschwindigkeit aus den entnommenen Geschwindigkeitsinformationswerten (v) Weginformationswerte (h) errechnet, die im Antriebsrechner (48) mit aktuellen Weginformationen (h) verknüpft und in Steuerzwischenwerte für die Regelkreise (30 bis 32) der Antriebsvorrichtungen (18 bis 20) umgeformt werden.

12. Verfahren zum Steuern der Einzelantriebe von Bearbeitungsmaschinen, insbesondere von Werkzeugmaschinen mit mehreren Werkzeug- und/oder Werkstückantriebsvorrichtungen, für die Bearbeitung von Werkstücken in Bearbeitungszyklen, mit folgenden Verfahrensschritten:
a) Speichern von mehreren Weginformationswerten (h) für jeden Einzelantrieb (18 bis 20) in einer Speichereinheit;
b) Erzeugen von mehreren Zählimpulsen (Z₁, Z₂...Zₘₐₓ) während eines Bearbeitungszyklus (B) der Bearbeitungsmaschine und Zählen der erzeugten Zählimpulse (Z) mit einem Impulszähler (35);
c) Abfragen des Zählerstandes (k) des Impulszählers (35) und der dem jeweiligen Zählerstand (k) zugeordneten Weginformatinswerte (h) für die Einzelantrieb (18 bis 20);
**dadurch gekennzeichnet, daß**
der Zählerstand (k) von einer Rechnereinheit (37) in gleichbleibenden Zeitabständen (Tastzeit) abgefragt wird und gleichzeitig die dem jeweiligen Zählerstand (k) zugeordneten Weginformationswerte (h) abgefragt werden und daß die abgefragten Weginformationswerte (h) von der Rechnereinheit (37) in für die Bearbeitung erforderliche Steuerwerte (s) umgeformt und als Sollwerte zu Regelkreisen (30 bis 32) für die jeweiligen Einzelantriebe (18-20) zugeführt werden.

13. Verfahren nach Anspruch 12, **gekennzeichnet durch** folgende Verfahrensschritte:
f) Vergleichen des jeweiligen (aktuellen) Zählerstandes im Tastzeitpunkt mit dem Zählerstand des vorhergehenden Tastzeitpunktes und
g) Errechnen eines dem aktuellen Tastzeitpunt zugeordneten Weginformationswertes durch Multiplizieren des dem Speicher am vorhergehenden Tastzeitpunkt entnommenen Geschwindigkeitswertes mit der Tastzeit, Addieren der errechneten Weginformation zu der dem vorhergehenden Tastzeitpunkt entsprechenden, aus dem Speicher entnommenen Weginformation zur Bildung eines Weginformationszwischenwertes, wenn die Zählimpulsfrequenz einen vorgegebenen Mindestwert unterschreitet und der Geschwindigkeitswert im vorhergehenden Tastzeitpunkt eine vorgegebene Grenzgeschwindigkeit überschreitet.

## Claims

1. Electronic control device for individual drive units of machining apparatus, and particularly of machine tools having a plurality of tool and/or workpiece drive systems, for machining workpieces by machining cycles, comprising
- a counter pulse generator (35) which includes a frequency generator (38) and a frequency converter (39) and generates a defined number of counting pulses (Z) during each machining cycle (B);
- a pulse counter (35) for counting said counting pulses (Z); and
- a memory unit (36) including memories (41 - 43) holding several position information values (h) for each individual drive unit (13,14,15,16,17, 18,19,20);
**characterized in that**
the frequency converter (39) comprises a plurality of frequency dividers (40), and that connected to said pulse counter (35) and said memory unit (36) there is provided a processor unit (37) which polls the count (k) of said pulse counter (35) at unchanging intervals (polling times) and extracts from said memory unit (36) certain position information values (h) assigned to each polled count (k) at the time of such poll, whereupon it converts said position information values (h) into the control values (s) required for the machining process and fed as setpoint values to the closed-loop control circuit (30,31, 32) for the respective indidividual drive unit (18,19,20).

2. Control device as set forth in claim 1, **characterized in that** said frequency generator is a pulse generator driven by a main drive unit of the machining apparatus.

3. Control device as set forth in claim 1 or 2, **characterized in that** said memory unit (36) comprises at least as many memories (41 through 43) as there are drive units (18 through 20) to be controlled.

4. Control device as set forth in any of claims 1 through 3, **characterized in that** said processor unit (37) comprises a setpoint processor (47) and a drive unit processor (48), said drive unit processor (48) adding compensation values to the setpoint values (s) intended for the drive units (18 through 20).

5. Control device as set forth in any of claims 1 through 4, **characterized in that** there is provided an electronic handwheel for manual operation.

6. Control device as set forth in any of claims 1 through 5, **characterized in that** said pulse counter (35) is an up/down counter.

7. Control device as set forth in any of claims 1 through 6, **characterized in that** said frequency generator (38) produces an unchanging source frequency (f_{Q}) that is nevertheless variable by means of an adjustment device.

8. Control device as set forth in any of claims 1 through 7, **characterized in that** said frequency converter (39) comprises a plurality of frequency dividers (40) as well as a frequency divider changeover device controlled by said pulse counter (35).

9. Control device as set forth in any of claims 1 through 8, **characterized in that** the number of counter pulses (Z) is freely selectable and the number of position information values (h) held in said memories (41 through 42) is at least equivalent to the number of counting pulses of said pulse counter (35) during any given machining cycle (B).

10. Control device as set forth in any of claims 1 through 9, **characterized in that** at least individual position information memories (41 through 43) are each assigned a speed information memory (44 through 46) that contains a limit speed constant and, for each item of position information (h), an item of speed information (v).

11. Control device as set forth in any of claims 1 through 10, **characterized in that** said processor unit (37) comprises an interpolator (54) computing position information values (h) from the speed information values (v) extracted, doing so as a function of the counting pulse frequency (f_{Z}) of said pulse counter (35) and of a preset limit speed, said position information being then combined in the drive unit processor (48) with current position information (h) and converted into intermediate control values for the closed-loop control circuits (30 through 32) of said drive units (18 through 20).

12. Process for controlling the individual drive units of machining apparatus, and particularly of machine tools having a plurality of tool and/or workpiece drive systems, for machining workpieces by machining cycles, said process com-prising the steps of
a) storing several position information values (h) for each individual drive unit (18 through 20) in a memory unit;
b) generating a plurality of counting pulses (Z₁, Z₂, ... Zₘₐₓ) during a machining cycle (B) of the machining apparatus and counting said counting pulises (Z) with the aid of a pulse counter (35);
c) polling the count (k) of said pulse counter (35) and the position information values (h) associated therewith for the individual drive unit (18 through 20);
**characterized in that**
the count (k) is polled by a processor unit (37) at unchanging intervals (polling times) while the position information values (h) assigned to each count (k) are being polled at the same time, and that the position information values (h) thus polled are converted by the processor unit (37) into control values (s) required for the machining process and fed in the form of setpoint values to a plurality of closed-loop control circuits (30 through 32) for the respective individual drive units (18 through 20).

13. Process as set forth in claim 12, **characterized in that** it comprises the steps of
f) comparing the respective (current) count at the the time of polling with the count of the last poll;
g) computing a position information value associated with the current polling time, said computation being made by multiplying the speed value extracted from memory at the last poll by the polling time, and adding the computed position information to that corresponding to the previous poll extracted from memory in order to obtain an intermediate position information value when the counter pulse frequency is below a preset value and the speed value at the previous poll exceeds a predefined limit speed.

## Revendications

1. Dispositif de commande électronique destiné aux commandes individuelles de machines d'usinage, en particulier des machines-outils équipées de plusieurs dispositifs de commande d'outil et/ou de pièce, pour l'usinage de pièces dans des cycles d'usinage, comprenant
- un générateur d'impulsions de comptage (34) présentant un générateur de fréquence (38) et un convertisseur de fréquence (39) qui produit pendant chacun des cycles d'usinage (B) un nombre défini d'impulsions de comptage (Z) ;
- un compteur d'impulsions (35) prévu pour compter les impulsions de comptage (Z) ; et
- une -unité de mémorisation (36) comprenant des mémoires (41 à 43) qui contiennent pour chaque commande individuelle (13, 14, 15, 18, 19, 20) plusieurs données de trajectoire (h),
caractérisé en ce que
le convertisseur de fréquence (39) présente plusieurs diviseurs de fréquence (40) et en ce que, au compteur d'impulsions (35) et à l'unité de mémorisation (36), est reliée une unité de calcul (37) qui analyse à intervalles de temps constants (temps d'échantillonnage) l'état (k) du compteur d'impulsions (35) et extrait à l'instant d'échantillonnage de l'unité de mémorisation (36) des données de trajectoire (h) affectées à l'état de compteur (k) respectivement analysé qu'elle convertit en valeurs de commande (s) nécessaires pour l'usinage, qui sont affectées sous forme de valeurs théoriques à un circuit de réglage (30, 31, 32) pour chacune des commandes individuelles (18, 19, 20).

2. Dispositif de commande selon la revendication 1, caractérisé en ce que le générateur de fréquence est un générateur d'impulsions commandé par une commande principale de la machine d'usinage.

3. Dispositif de commande selon la revendication 1 ou 2, caractérisé en ce que l'unité de mémorisation (36) présente au moins autant de mémoires (41 à 43) qu'il y a de dispositifs de commande (18 à 20).

4. Dispositif de commande selon l'une des revendications 1 à 3, caractérisé en ce que l'unité de calcul (37) présente un calculateur de valeur théorique (47) et un calculateur de commande (48), le calculateur de commande (48) ajoutant aux valeurs théoriques (s) des valeurs correctives destinées aux dispositifs de commande (18 à 20).

5. Dispositif de commande selon l'une des revendications 1 à 4, caractérisé en ce que pour l'actionnement manuel il est prévu un volant électronique.

6. Dispositif de commande selon l'une des revendications 1 à 5, caractérisé en ce que le compteur d'impulsions (35) est un compteur/décompteur.

7. Dispositif de commande selon l'une des revendications 1 à 6, caractérisé en ce que le générateur de fréquence (38) produit une fréquence de source (fQ) constante mais pouvant être modifiée à l'aide d'un dispositif de réglage.

8. Dispositif de commande selon l'une des revendications 1 à 7, caractérisé en ce que le convertisseur de fréquence (39) présente plusieurs diviseurs de fréquence (40) et un dispositif de changement de diviseur de fréquence qui est commandé par le compteur d'impulsions (35).

9. Dispositif de commande selon l'une des revendications 1 à 8, caractérisé en ce que le nombre d'impulsions de comptage (Z) peut être choisi librement et en ce que le nombre de données de trajectoire (h) dans les mémoires (41 à 43) correspond au moins au nombre des impulsions de comptage du compteur d'impulsions (35) pendant un cycle d'usinage (B).

10. Dispositif de commande selon l'une des revendications 1 à 9, caractérisé en ce qu'au moins une mémoire d'informations de vitesse (44 à 46) est affectée respectivement aux différentes mémoires d'informations de trajectoire (41 à 43), laquelle contient une constante de vitesse limite et, pour chaque information de trajectoire (h), une information de vitesse (v).

11. Dispositif de commande selon l'une des revendications 1 à 10, caractérisé en ce que l'unité de calcul (37) présente un interpolateur (54) qui déduit, en fonction de la fréquence d'impulsions de comptage (fZ) du compteur d'impulsions (35) et d'une vitesse limite prédéfinie, des données de trajectoire (h) à partir des données de vitesse (v) qui sont couplées dans le calculateur de commande (48) à des informations de trajectoire actuelles (h) et converties en valeurs intermédiaires de commande pour les circuits de réglage (30 à 32) des dispositifs de commande (18 à 20).

12. Procédé permettant de commander des commandes individuelles de machines d'usinage, en particulier des machines-outils équipées de plusieurs dispositifs de commande d'outil et/ou de pièce, pour l'usinage de pièces dans des cycles d'usinage, comprenant les étapes consistant à :
a) mémoriser plusieurs données de trajectoire (h) pour chaque commande individuelle (18 à 20) dans une unité de mémorisation ;
b) produire plusieurs impulsions de comptage (Z1, Z2...Zmax) pendant un cycle d'usinage (B) de la machine d'usinage et compter les impulsions de comptage produites (Z) avec un compteur d'impulsions (35) ;
c) analyser l'état (k) du compteur d'impulsions (35) et les données de trajectoire (h) affectées à l'état de compteur respectif (k) destinées aux commandes individuelles (18 à 20) ;
caractérisé en ce que
l'état de compteur (k) est analysé par une unité de calcul (37) à intervalles de temps constants et simultanément les données de trajectoire (h) affectées à l'état de compteur respectif (k) sont analysées et en ce que les données de trajectoire analysées (h) sont converties par l'unité de calcul (37) en valeurs de commande (s) nécessaires pour l'usinage et sont affectées sous forme de valeurs théoriques à des circuits de réglage (30 à 32) pour les commandes individuelles respectives (18 à 20).

13. Procédé selon la revendication 12, caractérisé en ce qu'il comprend les étapes consistant à :
f) comparer l'état de compteur (actuel) respectif à l'instant d'échantillonnage avec l'état de compteur enregistré à l'instant d'échantillonnage précédent et
g) déduire par calcul une donnée de trajectoire affectée à l'instant d'échantillonnage actuel en multipliant par le temps d'échantillonnage la valeur de vitesse extraite de la mémoire à l'instant d'échantillonnage précédent, ajouter l'information de trajectoire calculée à l'information de trajectoire extraite de la mémoire, correspondant à l'instant d'échantillonnage précédent, afin d'obtenir une donnée intermédiaire de trajectoire lorsque la fréquence d'impulsions de comptage descend en dessous d'une valeur minimale prédéfinie et que la valeur de vitesse dépasse une vitesse limite prédéfinie à l'instant d'échantillonnage précédent.
